# EUROPÄISCHE PATENTANMELDUNG

(11) **EP 1 312 925 A1**
(43) Veröffentlichungstag der Anmeldung: **21.05.2003**
(21) Anmeldenummer: 02024840.7
(22) Anmeldetag: 07.11.2002
(51) Int. Cl.: G01P 15/08, G01P 3/49, G01D 5/20

(54) **Gebersystem für einen Ferraris-Bewegungsgeber**

(30) Priorität: 19.11.2001 DE 10156782
(71) Anmelder: SIEMENS AKTIENGESELLSCHAFT, 80333 München (DE)
(72) Erfinder: Dünisch, Paul, 97618 Niederlauer (DE); Finkler, Roland, Dr., 91058 Erlangen (DE); Siess, Rainer, 91054 Erlangen (DE); Vollmer, Rolf, 36129 Gersfeld (DE)

(57) **Zusammenfassung**

Die Erfindung betrifft ein Gebersystem (GS) für einen Ferraris-Bewegungsgeber, bei dem ein oder mehrere Magnetfelderzeuger (ME1-ME5) zusammen mit einem elektrisch leitenden Messkörper (MK) mindestens eine magnetische Messanordnung bilden, wobei Magnetfelderzeuger (ME1-ME5) und Messkörper (MK) in Betrieb eine Relativbewegung zueinander ausführen und wobei durch einen daran angekoppelten Magnetfeldsensor (S) geschwindigkeits- oder beschleunigungsabhängige Ausgangssignale generierbar sind. Dabei wird durch mindestens zwei in axialer Richtung ineinandergreifende, zum Messkörper (MK) konzentrisch angeordnete Magnetkörper (M3-M6) das Magnetfeld der sich im Betrieb ausbildenden Wirbelströme geführt. Des Weiteren ist es auch möglich, dass das Erzeugermagnetfeld mittels erregerseitigen Klauenpolen (EK31-EK61) geführt ist.

## Beschreibung

Die Erfindung bezieht sich auf ein Gebersystem für einen Ferraris-Bewegungsgeber, bei dem ein oder mehrere Magnetfelderzeuger zusammen mit einem elektrisch leitenden Messkörper mindestens eine magnetische Messanordnung bilden, wobei Magnetfelderzeuger und Messkörper im Betrieb eine Relativbewegung zueinander ausführen und wobei durch einen daran angekoppelten Magnetfeldsensor geschwindigkeits- oder beschleunigungsabhängige Ausgangssignale generierbar sind.

Derartige Gebersystem sind beispielsweise aus dem Aufsatz "Aufnehmer zur Messung schnell veränderlicher Drehbeschleunigungen und Drehmomente", A. Denne, H. Rausch und W. Freise, Technisches Messen 48. Jahrgang 1981, Heft 10, Seite 339 bis 342 bekannt. Dabei dient als rotierender Messkörper ein Glockenläufer. Ferner ist aus der DE 37 30 841 A1 ein weiteres Gebersystem dieser Art bekannt, bei welchem als rotierender Messkörper eine Scheibe dient.

Mit einem einfach und kompakt aufgebauten Gebersystem ergeben sich deutliche Vorteile gegenüber herkömmlich aufgebauten Gebersystemen. Durch einen einfachen Aufbau lassen sich vorteilhaft Kosten einsparen, während eine Kompaktheit die Ausführung mit geringen Außenabmaßen gewährleistet und dadurch einen Einsatz in volumenkritischen Geräten überhaupt erst ermöglicht.

Bei den bekannten Lösungen kann ein mechanisches Spiel zwischen Messkörper und weiteren Teilen des Gebersystems dazu führen, dass sich Messfehler ergeben. Bei einem rotierenden Messkörper kann dies u.a. dadurch verursacht werden, dass die Symmetrieachse des Messkörpers nicht exakt mit der Welle zur Deckung gebracht werden kann und/oder dass der Messkörper nicht vollkommen rotationssymmetrisch ist. Weitere Fehler können beispielsweise durch Exzentrizität, Taumeln oder Inhomogenitäten des Messkörpers hervorgerufen werden. Daher werden beim Stand der Technik mindestens zwei Magnetfeldsensoren eingesetzt, die gleichmäßig auf einem Umfang verteilt sind. Hierdurch entsteht jedoch ein erhöhter Aufwand. Ein einfacherer Aufbau bei gleicher oder sogar verbesserter Messqualität stellt somit eine bedeutende Herausforderung dar.

Aufgabe der Erfindung ist es, ein Gebersystem der eingangs genannten Art zu verbessern.

Gemäß der Erfindung wird dies für ein Gebersystem der eingangs genannten Art dadurch erreicht, dass mindestens zwei ineinandergreifende, zum Messkörper konzentrisch angeordnete Magnetkörper das Magnetfeld der sich im Betrieb ausbildenden Wirbelströme führen. Hierdurch ist es in einfacher Weise möglich, dass nur ein Magnetfeldsensor, der beispielsweise als Spule ausgebildet ist und den Magnetkörper teilweise umschließt, das Magnetfeld der sich im Betrieb ausbildenden Wirbelströme des Messkörpers detektiert. Neben einem einfachen Signalabgriff ergeben sich insbesondere beim Zusammenbau des Gebersystems deutliche Einsparungen. Diese können sich in Materialeinsparungen, als auch einer Verringerung der Zusammenbauzeit des Gebersystems äußern. Des Weiteren ist es möglich, dass mindestens ein Magnet ein Magnetfeld bereitstellt und dieses Magnetfeld mit Hilfe von mindestens zwei ineinandergreifenden, zum Messkörper konzentrisch angeordnete Magnetkörpern geführt wird.

Eine erste vorteilhafte Ausbildung der Erfindung ist dadurch gekennzeichnet, dass mindestens ein Magnetfelderzeuger eine Magnetfeldquellenrichtung parallel zur Achse des Messkörpers bereitstellt, wobei das Magnetfeld mit Hilfe von mindestens zwei erregerseitigen Klauenpolringen geführt ist, wobei die jeweiligen Magnetfeldpole der erregerseitigen Klauenpolringe abwechselnd ineinander greifen und konzentrisch zum Messkörper angeordnet sind. Somit kann bereits mit einem Magneten eine Vielzahl von erregerseitigen Polen bereitgestellt werden. Der Magnet kann dabei als Permanent- oder auch als Elektromagnet ausgeführt werden.

Eine weitere vorteilhafte Ausbildung der Erfindung ist dadurch gekennzeichnet, dass durch den Magnetfeldsensor abhängig von der magnetischen Feldstärke in den Magnetkörpern als End- oder Zwischensignal elektrische oder optische Signale ausgebbar sind. Werden elektrische Signale durch den Magnetfeldsensor ausgegeben, so können diese in einfacher Weise durch eine Aufbereitungs- oder Auswerteelektronik verarbeitet werden. Optische Signale können durch Signalwandler ebenso in elektrische Signale gewandelt werden, bieten jedoch den Vorteil, dass sie potentialfrei abgegriffen werden können.

Eine weitere vorteilhafte Ausbildung der Erfindung ist dadurch gekennzeichnet, dass der Magnetfeldsensor aus mindestens einer Spulenwicklung mit mindestens einer Windung besteht, die mindestens einen im Betrieb magnetfeldführenden sensorseitigen Klauenpolring teilweise umschließt. Somit kann vorteilhaft ein Klauenpolring verwendet werden, um das Magnetfeld der sich im Betrieb ausbildenden Wirbelströme zu erfassen.

Eine weitere vorteilhafte Ausbildung der Erfindung ist dadurch gekennzeichnet, dass mindestens eine Spulenwicklung mit mindestens einer Windung konzentrisch zum Messkörper angeordnet ist. Somit kann der Montageaufwand des Gebersystems deutlich reduziert werden. Des Weiteren kann eine Auswertung bereits mit einem Sensorsignal stattfinden, welches integral das Magnetfeld des Gebersystems erfasst.

Eine weitere vorteilhafte Ausbildung der Erfindung ist dadurch gekennzeichnet, dass der Magnetfeldsensor aus mindestens einem Hall-Element oder einem magnetoresistiven oder einem magnetooptischen Sensor besteht. Somit können die genannten Magnetfeldsensoren vorteilhaft in der Erfindung verwendet werden.

Eine weitere vorteilhafte Ausbildung der Erfindung ist dadurch gekennzeichnet, dass die Magnetfelder mindestens zweier Magnetfelderzeuger den Messkörper durchdringen, wobei diese auf einem Radius konzentrisch zum Messkörper angeordnet und jeweils abwechselnd verschiedenartig gepolt sind. Durch die konzentrische Anordnung von Magnetfelderzeugern auf einem Radius in abwechselnd gepolter Weise, können vorteilhaft Drehbewegungen eines rotierenden Messkörpers erfasst werden.

Eine weitere vorteilhafte Ausbildung der Erfindung ist dadurch gekennzeichnet, dass mindestens eine stromdurchflossene Spulenwicklung mit mindestens einer Wicklung die Magnetfeldquelle bereitstellt, wobei ein Gleich- oder Wechselstrom in die Spulenwicklung eingeprägt werden kann. Somit kann vorteilhaft mindestens ein Elektromagnet in der Erfindung verwendet werden.

Eine weitere vorteilhafte Ausbildung der Erfindung ist dadurch gekennzeichnet, dass in dem Gebersystem mindestens zwei Magnetfeldsensoren, beispielsweise bestehend aus je einer Spulenwicklung mit mindestens jeweils einer Wicklung, wobei die aufgrund der Relativbewegung des Messkörpers entstehenden Nutzfelder in den Magnetfeldsensoren entgegengesetzt gerichtet sind und wobei die Sensorsignale von mindestens zwei Magnetfeldsensoren subtrahiert werden. Somit können vorteilhafte Störmagnetfelder kompensiert werden. Ebenso wird hierdurch eine höhere Empfindlichkeit erreicht, da die Nutzsignale sich addieren.

Eine weitere vorteilhafte Ausbildung der Erfindung ist dadurch gekennzeichnet, dass das Gebersystem mindestens teilweise mit einer magnetischen Schirmung versehen ist. Somit können magnetische Störfelder vom Messsystem des Gebersystems ferngehalten werden. Des Weiteren ist es denkbar, dass die magnetische Schirmung durch das Gehäuse des Gebersystems realisiert wird.

Ausführungsbeispiele der Erfindung sind in den Zeichnungen dargestellt und werden im folgenden näher erläutert. Dabei zeigen:
- FIG 1: eine Explosionsdarstellung eines Ferraris-Bewegungsgebers mit zu den sensorseitigen Klauenpolringenen innenliegenden Magnetfelderzeugern,
- FIG 2: eine Magnetfelderzeugeranordnung,
- FIG 3: eine Schnittansicht durch Sensorspulen, sowie Magnetfelderzeugern,
- FIG 4: eine Explosionsdarstellung eines Ferraris-Bewegungsgebers ohne Gehäuse und Messkörper, bei dem die erregerseitigen Klauenpolringe die sensorseitigen Klauenpolringe teilweise umschließen,
- FIG 5: Seiten- und Draufsicht eines Ferraris-Bewegungsgebers ohne Gehäuse und Messkörper.

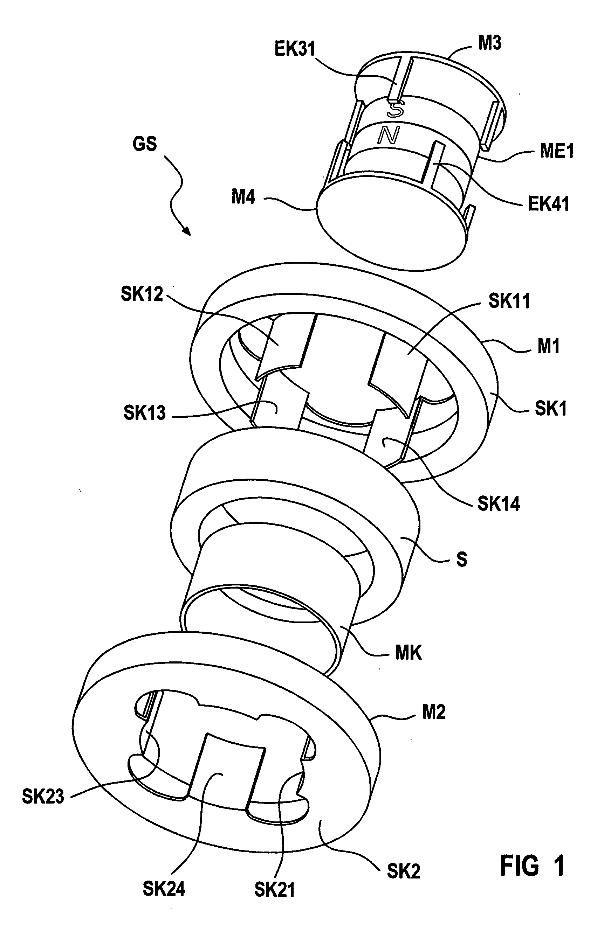

In der Darstellung gemäß FIG 1 ist in Form einer Explosionsdarstellung ein Ferraris-Bewegungsgeber mit zu den sensorseitigen Klauenpolen SK11 bis SK24 innenliegendem Magnetfelderzeuger ME1 dargestellt. Dabei wird der Magnetfelderzeuger ME1, der einen magnetischen Nord- und Südpol aufweist, der durch ein N und S in der Darstellung gekennzeichnet ist, durch die jeweils als Klauenpolring ausgebildeten Magnetkörper M3, M4 umgeben. Der Magnetfelderzeuger ME1 ist zylinderförmig, wobei an den jeweiligen kreisförmigen Außenflächen die Magnetkörper M3 und M4 angrenzen, die ebenfalls eine kreisförmige Grundfläche aufweisen. Von den Grundflächen der Magnetkörper M3, M4 stehen die erregerseitigen Klauenpole EK31 und EK41 im rechten Winkel, parallel zur Hauptachse des Gebersystems GS ab, so dass diese den Magnetfelderzeuger ME1 umgreifen. Der Übersichtlichkeit halber sind in dieser Darstellung nur zwei erregerseitige Klauenpole EK31 und EK41 bezeichnet.

Das Magnetfeld des Magnetfelderzeugers ME1 weist eine Magnetfeldquellenrichtung parallel zur Hauptachse des Gebersystems GS auf, das durch die Magnetkörper M3 und M4 geführt wird.

Der Messkörper MK führt zum Magnetfelderzeuger ME1 und seinen Magnetkörpern M3 und M4 eine Relativbewegung aus. Der Messkörper MK kann beispielsweise mit einer angetriebenen Welle befestigt sein. Dadurch werden im Messkörper MK, der aus elektrisch leitfähigem Material ausgeführt ist, Wirbelströme hervorgerufen, die wiederum Magnetfelder verursachen. Die Wirbelströme und somit auch die resultierenden Magnetfelder sind geschwindigkeits- und beschleunigungsabhängig. Vom Gebersystem GS werden nun die durch den Messkörper MK hervorgerufenen Magnetfelder erfasst und ausgegeben. Die Magnetfelder werden polrichtig von den sensorseitigen Klauenpolen SK11 bis SK24 aufgenommen und geführt. Dabei ist die Anzahl der sensorseitigen Klauenpole SK11 bis SK24 auf die Anzahl der erregerseitigen Klauenpole EK31, EK41 abgestimmt.

Die sensorseitigen Klauenpole SK11 bis SK24 sind jeweils auf einem sensorseitigen Klauenpolträger SK1, SK2 aufgebracht und bilden somit einen jeweiligen als Klauenpolring ausgebildeten Magnetkörper M1 bzw. M2. Diese Magnetkörper greifen mit ihren sensorseitigen Klauenpolen SK11 bis SK24 in entgegengesetzte Richtung, parallel zur Hauptachse des Gebersystems GS ineinander.

Durch die erfindungsgemäße Ausführung ergibt sich eine einfache und kompakte Aufbauweise des Gebersystems GS. Im zusammengebauten Zustand umschließt die Spule S achsumlaufend die Klauenpole SK11 bis SK24. Die Magnetkörper M1 und M2 umschließen dabei die Spule S und berühren sich an den jeweils zugewandten Seiten des sensorseitigen Klauenpolträgers SK1 und SK2. Damit wird der Magnetkreis an diesen Stellen weitestgehend ohne Luftspalt geschlossen.

Die Spule S umschließt das in den Klauenpolen SK11 bis SK24 geführte Magnetfeld und kann somit ein magnetfeldabhängiges Sensorsignal ausgeben.

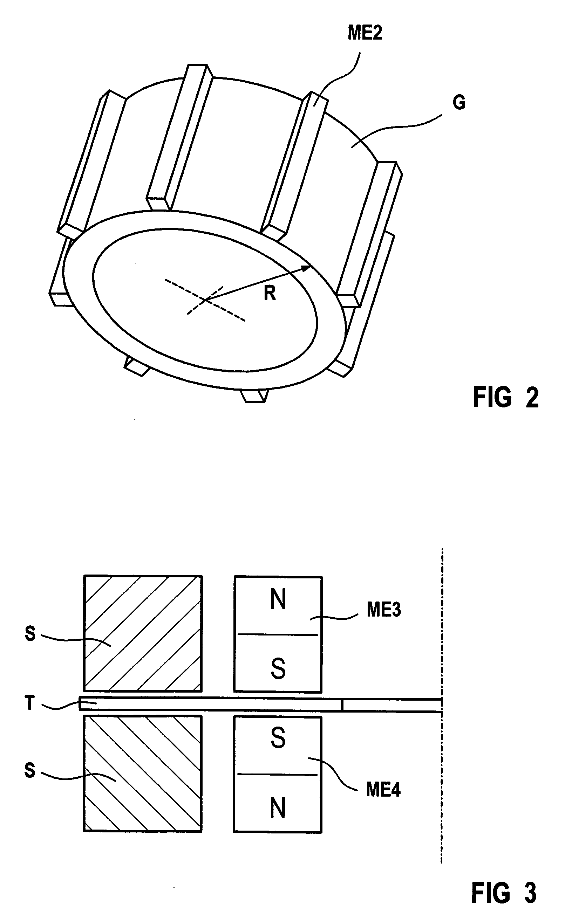

In der Darstellung gemäß FIG 2 ist eine Magnetfelderzeugeranordnung dargestellt, wobei Magnetfelderzeuger ME1 bis ME8 auf einem Radius R konzentrisch zur Hauptachse des Gebersystems GS ausgerichtet sind. In der Darstellung ist nur der Magnetfelderzeuger ME2 der Übersichtlichkeit halber gekennzeichnet. Sämtliche Magnetfelderzeuger ME1 bis ME8 sind dabei auf einem Grundträger G derart angeordnet, dass sich ihre Magnetfeldpole jeweils abwechseln. Der Grundkörper G ist als Hohlzylinderabschnitt ohne kreisförmige Außenflächen senkrecht zur Achse ausgeführt. Die Magnetfelderzeuger ME1 bis ME8 können dabei beispielsweise als Permanent- oder als Elektromagnete ausgeführt sein.

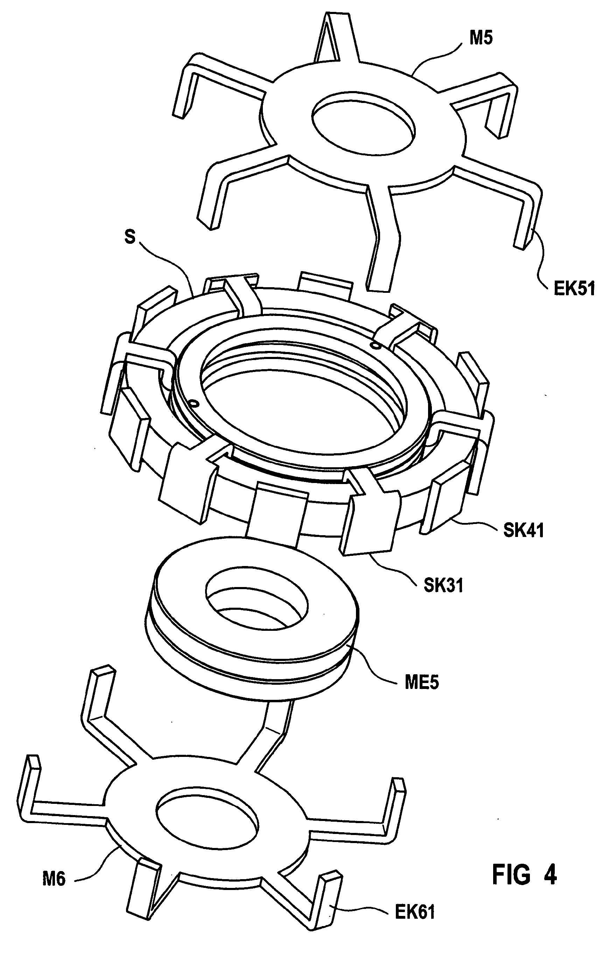

In der Darstellung gemäß FIG 3 ist eine Schnittansicht durch ein Gebersystem GS dargestellt, das aus zwei axial übereinander angeordnete Anordnungen besteht, die jeweils entsprechend FIG 4 aufgebaut sind; dabei sind hier der Übersichtlichkeit halber nur die Sensorspulen S mit den jeweils zugehörigen Magnetfelderzeugern ME3 bis ME4 dargestellt. In der Darstellung ist dabei nur eine von der Hauptachse des Gebersystems GS ausgehende Schnitthälfte eingezeichnet. Ober- und unterhalb eines Trägers T befinden sich dabei Spulen S mit jeweils unterschiedlichem Wicklungssinn. Die Magnetfelderzeuger ME3 und ME4 befinden sich konzentrisch innenliegend zu den Spulen S. Die Magnetfeldquellenrichtung der übereinander angeordneten Magnetfelderzeuger ME3 und ME4 ist dabei entgegengesetzt. Durch diesen Aufbau, der in der Darstellung nur ausschnittsweise dargestellt ist, wird erreicht, dass magnetische Störfelder aus dem Sensorsignal eliminiert werden können, in dem die Einzelsignale der Spulen S subtrahiert werden. Dadurch wird das resultierende Sensorausgangssignal verdoppelt und ein störendes Magnetfeld eliminiert. Ein Störmagnetfeld führt zu betragsmäßig gleichen, aber vom Vorzeichen unterschiedlichen Sensorsignalen in den jeweiligen Spule S.

In der Darstellung gemäß FIG 4 ist eine Explosionsdarstellung eines Ferraris-Bewegungsgebers GS dargestellt, bei dem die erregerseitigen Klauenpolringe M5 und M6 die sensorseitigen Klauenpolringe, von denen hier nur jeweils ein Klauenpol, nämlich SK31 und SK41 bezeichnet ist, teilweise umschließen. Im Gegensatz zu dem in FIG 1 dargestellten Aufbau befindet sich die Sensorspule S innerhalb und konzentrisch zu den erregerseitigen Klauenpolen, von denen hier nur EK51 und EK61 bezeichnet sind und gleichzeitig innerhalb und konzentrisch zu den sensorseitigen Klauenpolen, von denen nur SK31 und SK41 bezeichnet sind. In der Darstellung gemäß FIG 4 ist der Übersichtlichkeit halber nur jeweils Klauenpol SK31, SK41 bzw. EK51, EK61 dargestellt.

Konzentrisch innenliegend zur Spule S und den sensorseitigen Klauenpolen SK31 und SK41 befindet sich der Magnetfelderzeuger ME5. Dieser weist eine zylinderartige Form mit kreisförmiger Grundfläche auf, wobei konzentrisch eine zylinderförmige Geometrie mit kreisförmiger Grundfläche ausgespart ist. Das Magnetfeld des Magnetfelderzeugers ME5 wird durch die als Klauenpolringe ausgeführten Magnetkörper M5 und M6 polrichtig um die gesamte Anordnung geführt. Die Magnetkörper M5 und M6 schließen an den gegenüberliegenden Grundflächen des Magnetfelderzeugers ME5 an und umschließen das dargestellte Gebersystem GS. Die Magnetkörper M5 und M6 sind in der Darstellung topfförmig ausgebildet, wobei zinnenförmig Strukturen parallel zur Hauptachsrichtung des Gebersystems GS ausgebildet sind. Ein nicht dargestellter Messkörper MK läuft konzentrisch zur Hauptachse des Gebersystems GS außerhalb der erregerseitigen Klauenpole EK51 und EK61 und der sensorseitigen Klauenpole SK31 und SK41 um.

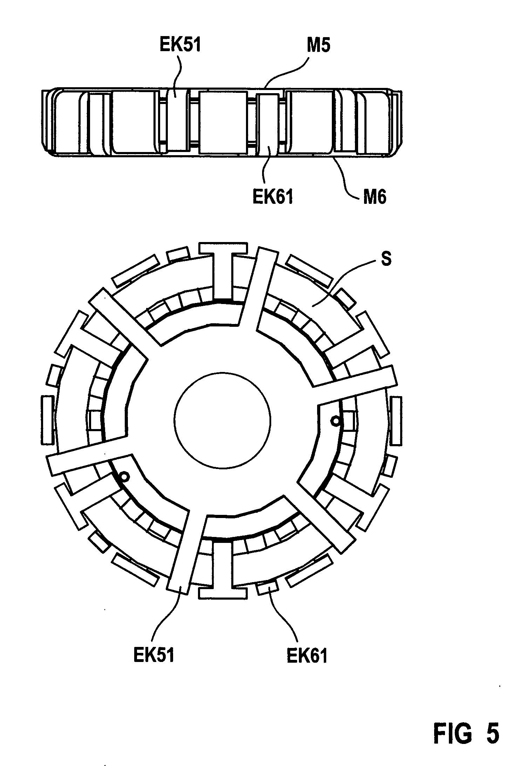

In der Darstellung gemäß FIG 5 ist eine Seiten- und Draufsicht eines Ferraris-Bewegungsgebers GS ohne Gehäuse und Messkörper MK dargestellt. Dabei wurde der innere Aufbau des Gebersystems GS gemäß FIG 4 erläutert. In der Darstellung gemäß FIG 5 ist im oberen Bereich eine Ansicht des Gebersystems GS senkrecht zur Hauptachsrichtung zu erkennen. Die erregerseitigen Klauenpole EK51 und EK61 umschließen dabei polrichtig die Sensorspule S mit zugehörigen Klauenpolen SK31 und SK41, die in dieser Darstellung nicht bezeichnet sind. Der Übersichtlichkeit halber sind nur die erregerseitigen Klauenpole EK51 und EK61 bezeichnet, die Teil der jeweils zugehörigen Magnetkörper M5 und M6 sind.

Im unteren Teil der Darstellung gemäß FIG 5 ist eine Draufsicht des Gebersystems GS dargestellt, d.h. die Blickrichtung ist parallel zur Hauptachse ausgerichtet. Zu erkennen ist der Magnetkörper M5, von dem zunächst strahlenförmig die erregerseitigen Klauenpole EK51 ausgehen. Diese sind am Außenrand um 90° in Hauptachsausrichtung abgewinkelt. Des Weiteren ist die Spule S zu erkennen.

Das dargestellte Gebersystem GS weist einen einfachen, kompakten Aufbau auf. Eine Vervielfachung der Polzahl, die einerseits zur Reduzierung umdrehungsperiodischer Störsignale aufgrund von Exzentrizität, Taumeln oder Messkörperinhomogenitäten wünschenswert ist, ist ohne nennenswerte Aufwandserhöhung möglich. Andererseits ist dies auch insofern vorteilhaft, als sich dadurch kleinere Abmessungen der Einzelpole und damit letztlich auch kleinere Zeitkonstanten und damit eine bessere Dynamik ergeben. Die jeweiligen Klauenpole können beispielsweise durch Stanzvorgänge geformt und anschließend auf ihre endgültige Form gebogen werden. Die Magnetkörper M1 bis M6 können beispielsweise aus ferromagnetischem Material ausgeführt sein. Zur Verbesserung der Messeigenschaften des Gebersystems GS können weitere, beispielsweise bei Transformatoren übliche, Maßnahmen (Kernblechung) angewandt werden. Der Aufbau der vorgestellten Gebersysteme GS lässt erhebliche Kosteneinsparungen bei der Herstellung, als auch dem Zusammenbau des Gebers zu.

## Patentansprüche

1. Gebersystem für einen Ferraris-Bewegungsgeber, bei dem ein oder mehrere Magnetfelderzeuger zusammen mit einem elektrisch leitenden Messkörper mindestens eine magnetische Messanordnung bilden, wobei Magnetfelderzeuger und Messkörper im Betrieb eine Relativbewegung zueinander ausführen und wobei durch einen daran angekoppelten Magnetfeldsensor geschwindigkeits- oder beschleunigungsabhängige Ausgangssignale generierbar sind, **dadurch gekennzeichnet, dass** mindestens zwei ineinandergreifende, zum Messkörper (MK) konzentrisch angeordnete Magnetkörper (M1-M6) das Magnetfeld der sich im Betrieb ausbildenden Wirbelströme führen.

2. Gebersystem für einen Ferraris-Bewegungsgeber, bei dem ein oder mehrere Magnetfelderzeuger zusammen mit einem elektrisch leitenden Messkörper mindestens eine magnetische Messanordnung bilden, wobei Magnetfelderzeuger und Messkörper im Betrieb eine Relativbewegung zueinander ausführen und wobei durch einen daran angekoppelten Magnetfeldsensor geschwindigkeits- oder beschleunigungsabhängige Ausgangssignale generierbar sind, **dadurch gekennzeichnet, dass** mindestens ein Magnetfelderzeuger (ME1-ME5) eine Magnetfeldquellenrichtung parallel zur Achse des Messkörpers (MK) bereitstellt, wobei das Magnetfeld mit Hilfe von mindestens zwei erregerseitigen Klauenpolen (EK31-EK61) geführt ist, wobei die jeweiligen Magnetfeldpole der erregerseitigen Klauenpole (EK31-K61) abwechselnd ineinander greifen und konzentrisch zum Messkörper (MK) angeordnet sind.

3. Gebersystem nach einem der vorstehenden Ansprüche, **dadurch gekennzeichnet, dass** durch den Magnetfeldsensor abhängig von der magnetischen Feldstärke in den Magnetkörpern (M1-M6) als End- oder Zwischensignal elektrische oder optische Signale ausgebbar sind.

4. Gebersystem nach einem der vorstehenden Ansprüche, **dadurch gekennzeichnet, dass** der Magnetfeldsensor aus mindestens einer Spulenwicklung (S) mit mindestens einer Windung besteht, die mindestens einen im Betrieb magnetfeldführenden sensorseitigen Klauenpolring teilweise (M1,M2) umschließt.

5. Gebersystem nach einem der vorstehenden Ansprüche, **dadurch gekennzeichnet, dass** mindestens eine Spulenwicklung (S) mit mindestens einer Windung konzentrisch zum Messkörper (MK) angeordnet ist.

6. Gebersystem nach einem der vorstehenden Ansprüche, **dadurch gekennzeichnet, dass** der Magnetfeldsensor aus mindestens einem Hall-Element oder einem magnetoresistiven oder einem magnetooptischen Sensor besteht.

7. Gebersystem nach einem der vorstehenden Ansprüche, **dadurch gekennzeichnet, dass** die Magnetfelder mindestens zweier Magnetfelderzeuger (ME1-ME5) den Messkörper (MK) durchdringen, wobei diese auf einem Radius (R) konzentrisch zum Messkörper (MK) angeordnet und jeweils abwechselnd verschiedenartig gepolt sind.

8. Gebersystem nach einem der vorstehenden Ansprüche, **dadurch gekennzeichnet, dass** mindestens eine stromdurchflossene Spulenwicklung mit mindestens einer Wicklung die Magnetfeldquelle bereitstellt, wobei ein Gleichoder Wechselstrom in die Spulenwicklung eingeprägt werden kann.

9. Gebersystem nach einem der vorstehenden Ansprüche, **dadurch gekennzeichnet, dass** in dem Gebersystem (GS) mindestens zwei Magnetfeldsensoren, beispielsweise bestehend aus je einer Spulenwicklung (S) mit mindestens jeweils einer Wicklung, wobei die aufgrund der Relativbewegung des Messkörpers (MK) entstehenden Nutzfelder in den Magnetfeldsensoren entgegengesetzt gerichtet sind und wobei die Sensorsignale von mindestens zwei Magnetfeldsensoren subtrahiert werden.

10. Gebersystem nach einem der vorstehenden Ansprüche, **dadurch gekennzeichnet, dass** das Gebersystem (GS) mindestens teilweise mit einer magnetischen Schirmung versehen ist.
